# EUROPEAN PATENT APPLICATION

(11) **EP 4 298 925 A1**
(43) Date of publication of application: **03.01.2024**
(21) Application number: 23182690.0
(22) Date of filing: 30.06.2023
(51) Int. Cl.: A23P 30/10, A23P 30/38, A21D 13/50, A23L 7/165

(54) **METHOD FOR MANUFACTURING FINGER FOOD AND OBTAINED FINGER FOOD**

(30) Priority: 01.07.2022 BE 202205542
(71) Applicant: Meco nv, 8400 Oostende (BE)
(72) Inventor: Van Steenkiste, Jurn, 8400 Oostende (BE)
(74) Representative: Brantsandpatents bv

(57) **Abstract**

The present invention relates to a method for manufacturing finger food from a food product comprising the sequential steps of: (i) cutting up a prepared food product into a dough; (ii) adding one or more leavening agents to the dough; (iii) filling the dough into molds; (iv) steaming the filled dough from step (iii) at a temperature between 80 and 120°C, whereby the dough rises and finger food is obtained; and (v) blast chilling and freezing the finger food.

## Description

### TECHNICAL FIELD

The invention relates to a method for manufacturing finger food, as well as obtained finger food.

### PRIOR ART

A common problem in older people and people with swallowing and chewing difficulties is malnutrition. People have reduced motor skills and a loss of muscle mass, which usually requires help with eating. These people often also need to be fed and can no longer eat independently because it is difficult to hold cutlery. There is reduced or poor appetite in these people and, in addition, the senses of "taste" and "smell" are also significantly impaired. That, in combination with reduced motor skills, makes eating a difficult task for these people, which they often cannot do without help.

US6676986 discloses a method of making food products for children or adults who cannot chew their food properly due to age or illness. However, this document does not take into account the reduced motor skills that older people may have, as a result of which these people still need help eating this food product.

A solution to this is the use of finger food. However, finger food is now often made manually and/or fresh and is difficult to produce industrially. It is difficult to obtain and also maintain the right texture and elasticity further down the supply chain.

Moreover, there is often a loss of taste and aroma in the industrial production of finger food, as the production processes are not aimed at large-scale application and to deliver products that need to be stored.

Moreover, problems such as loss of texture, elasticity, taste and/or aroma often occur when freezing and thawing known finger food.

Moreover, preparing finger food manually and/or freshly (e.g., in nursing homes, etc.) is time-consuming for staff, as it requires staff to prepare the dishes "à la minute".

The present invention aims to find a solution for at least some of the above problems.

### SUMMARY OF THE INVENTION

To this end, the invention relates to a method for manufacturing finger food according to claim 1. Preferred forms of the method are set out in claims 2 up to and including 11.

In a second aspect, the invention relates to finger food according to claim 12. Preferred forms of the finger food are set out in claims 13 up to and including 15.

The object of the invention is to provide a solution to various problems occurring in the manufacture of finger food.

The method makes it possible to industrially obtain finger food that feels soft in the mouth and which is also an aid to combat malnutrition, because the nutritional value of the food product is preserved. The method allows for more efficient finger food production without sacrificing quality.

The obtained finger food can be frozen and thawed without loss of taste, texture, aroma and elasticity.

The finger food obtained has improved elasticity and texture, with the texture being consistent enough not to disintegrate during consumption, but also not too much so, so that the elderly do not have difficulty chewing. Moreover, the finger food allows an easy grip between the fingers or in the hand without falling apart.

In addition, the obtained finger food can be delivered to the consumer in a frozen state, which considerably increases the shelf life of the product. This also preserves tastes and aromas in the finger food during storage, as well as the nutritional value of the product. This is also expedited by cooking/pasteurizing the food products prior to processing them into finger food.

The finger food also has the advantage that no raw materials/ingredients need to be purchased or stored in the nursing homes themselves. In addition, the use of finger food saves time for the staff, because people can eat independently at their own pace. This also ensures a better self-image of the person in question.

The original flavors of the food product are preserved. This can improve appetite by stimulating the senses again.

As an additional advantage, the finger food can also be cost-saving, as supplementary food can be reduced or decreased.

The method can be applied to various types of food products, allowing for meals to be composed that contain both meat/fish, vegetables, and starch in a correctly nutritionally balanced amount.

The method is also advantageous because no additional additives need to be added.

### DETAILED DESCRIPTION

The invention relates to a method for manufacturing finger food.

Unless otherwise defined, all terms used in the description of the invention, including technical and scientific terms, have the meanings as commonly understood by those skilled in the art of the invention. For a better understanding of the description of the invention, the following terms are explained explicitly.

In this document, "a", "an" and "the" refer to both the singular and the plural, unless the context presupposes otherwise. For example, "a segment" means one or more than one segment.

The terms "comprise," "comprising," "provided with,", "include," "including", "contain," "containing," are synonyms and are inclusive or open-ended terms that indicate the presence of what follows, and which do not exclude or prevent the presence of other components, characteristics, elements, members, steps, as known from or disclosed in the prior art.

The terms "consist of," "consisting of," are synonyms and are exclusive or closed-ended terms indicating the presence of what follows, and excluding or precluding the presence of other components known or described in the art.

Quoting numeric intervals by the endpoints includes all integers, fractions, and/or real numbers between the endpoints, including those endpoints.

The "shelf life" of a product is defined as the period during which a product can be stored without the quality falling below a certain acceptable minimum level.

In a first aspect, the invention relates to a method for manufacturing finger food from a food product.

In an embodiment, the method comprises the sequential steps of:
i. cutting up a food product into a dough;
ii. adding one or more leavening agents to the dough;
iii. filling the dough into molds;
iv. steaming the filled dough from step (iii) at a temperature of between 80 and 120°C, wherein the dough rises and finger food is obtained; and
v. blast chilling and freezing of the finger food.

In an embodiment, the food product is a prepared food product, preferably composed according to a recipe. The food product can be a starch dish, a meat dish, a vegetable dish, a fruit dish, a fish dish, a dairy dish, a dessert dish, or a combination thereof. Combinations of dishes are possible, such as spaghetti bolognaise (meat, vegetables, starch) or ham rolls with chicory (meat, vegetables) or cauliflower in cheese sauce (vegetables, dairy, starch).

Examples of starch dishes are potatoes, rice, pasta, bread. Preferably, a starch dish comprises potatoes or rice. Examples of meat dishes are loin roast, poultry dish, beef burger, ham rolls, veal blanquette, stew, vol-au-vent, spaghetti bolognaise. Examples of fish dishes are pollock, salmon, sole, cod. Examples of vegetable dishes include cauliflower in cheese sauce, broccoli in béchamel sauce, peas, carrots, stewed beans, stewed carrots, spinach. An example of a fruit dish is applesauce. An example of a dessert dish is chocolate or apple caramel.

Preferably, the food product is a precooked food product. This means that the product undergoes at least one heat step during preparation, such as, for example, boiling, steaming, baking, roasting, heating, grilling, frying, deep-frying, oven baking, blanching, stir-frying, stewing, or a combination thereof.

In an embodiment, the food products are packaged after preparation. Preferably, the food products are packaged using thermoformed packaging. Thermoformed packaging consists of a bottom film and a top film. The thermoforming can be carried out on a thermoforming device in which a bottom foil is transported in a conveyor chain to the forming station. In an embodiment the bottom foil is heated in the forming station and the desired bag/packaging is formed with the aid of compressed air and/or vacuum. The resulting formed bag/packaging is then filled with the product to be packed. In an embodiment, the filled bag/packaging then goes into the sealing station together with the top foil. Then the filled bag/pack is made airless via: the narrow top film, holes in the side or a cross bar with nozzles. Optionally, a modified atmosphere (MAP) is then applied here, after which the packaging can be sealed. The result is a high-quality and airtight packaging. The advantage of thermoformed packaging the food product is that the packaging keeps out oxygen and the gas mixture remains in the packaging. As a result, fresh products will keep longer before use and thus an increased shelf life is obtained.

In a first step (i) the food product is cut up. In a preferred form, the food product is cooked prior to being cut up. In another preferred form, the cooking proceeds after the food product has been thermoform packaged. Cooking is heating a dish until it is cooked. Cooked means that proteins have changed structure, and in the case of vegetable foods, this manifests itself in a loss of stiffness of the material. Food can be cooked by raising the temperature.

In a preferred form, the cooking takes place at a temperature of between 60 and 140°C, preferably at a temperature of between 65 and 135°C, more preferably at a temperature of between 70 and 130°C, even more preferably at a temperature of between 75 and 125°C, even more preferably at a temperature of between 80 and 120°C, even more preferably at a temperature of between 85 and 115°C, even more preferably at a temperature of between 90 and 110°C, even more preferably at a temperature of between 92 and 104°C, even more preferably at a temperature of between 93 and 103°C, even more preferably at a temperature of between 94 and 102°C, even more preferably at a temperature of between 95 and 101°C, even more preferably at a temperature of between 96 and 100°C, most preferably at a temperature of between 97 and 99°C.

In a preferred form, the cooking continues for a period of time comprised between 60 and 180 minutes, preferably between 65 and 175 minutes, more preferably between 70 and 170 minutes, even more preferably between 75 and 165 minutes, even more preferably between 80 and 160 minutes, even more preferably between 85 and 155 minutes, even more preferably between 90 and 150 minutes, even more preferably between 95 and 145 minutes, even more preferably between 100 and 140 minutes, even more preferably between 105 and 135 minutes, even more preferably between 110 and 130 minutes, even more preferably between 115 and 125 minutes, even more preferably between 116 and 124 minutes, even more preferably between 117 and 123 minutes, even more preferably between 118 and 122 minutes, most preferably between 119 and 121 minutes.

The high temperature during cooking also pasteurizes the food product. The term "pasteurize" or "pasteurization" refers to the process in the food industry that destroys harmful bacteria in perishable food products by heating the food briefly, without changing the product too much. Pasteurization aims to reduce the number of microorganisms to a safe level, i.e. the level at which they are unlikely to cause disease (when stored refrigerated and consumed before the expiration date).

The cooking/pasteurization affects the quality of the raw materials and, consequently, the quality of the finger food. The cooking process preserves flavors and aromas. The original flavors of the food product are therefore retained in the finger food.

The thermoformed packaging contributes to increasing the shelf life of the raw materials with which the finger food is prepared. Pasteurization and thermoformed packaging make it possible to produce finger food in an industrial manner without loss of taste and aroma of the raw materials.

In a preferred form, the food product is cooled prior to being cut up.

In an embodiment, cooling takes place at a minimum temperature of 0°C, preferably the temperature is at least 0.5°C. In a further or another embodiment, the temperature is maximally 15°C, preferably maximally 14°C, more preferably maximally 13°C, even more preferably maximally 12°C, even more preferably maximally 11°C, even more preferably maximally 10°C, even more preferably maximally 9°C, even more preferably maximally 8°C, even more preferably maximally 7°C, even more preferably maximally 6°C, even more preferably maximally 5°C, even more preferably maximally 4°C, even more preferably maximally 3°C, even more preferably maximally 2°C, most preferably maximally 1.5°C. In a preferred form, the temperature is between 0 and 2°C, more preferably between 0.5 and 1.5°C.

In a preferred form, the cooling continues for a period of time comprised between 60 and 540 minutes, more preferably between 120 and 480 minutes, even more preferably between 180 and 420 minutes, even more preferably between 190 and 410 minutes, even more preferably between 200 and 400 minutes, even more preferably between 210 and 390 minutes, even more preferably between 220 and 380 minutes, even more preferably between 230 and 370 minutes, even more preferably between 240 and 360 minutes, even more preferably between 250 and 350 minutes, even more preferably between 260 and 340 minutes, even more preferably between 270 and 330 minutes, even more preferably between 275 and 325 minutes, even more preferably between 280 and 320 minutes, even more preferably between 285 and 315 minutes, even more preferably between 290 and 310 minutes, most preferably between 295 and 305 minutes.

The food product can then be stored in a cooling device before being cut up.

Cutting up of the food product in step (i), in which the food product is reduced in size, can be done manually or mechanically. The cutting up is preferably done mechanically. The cutting up can, for example, take place in an industrial cutting device. Even more preferably, the cutting up takes place in a micro-cutter. Preferably, the food product is also mixed or kneaded during cutting. A dough is thus obtained during cutting up.

In the context of the method described the term "cutting up" refers to the process of cutting, chopping, grinding or crushing a food product to obtain a dough. This may mean, for example, that a solid food product, such as meat or vegetables, is processed into small pieces to obtain a dough-like consistency. The purpose of this step is to transform the food product into a suitable base for further processing in the production process, with the dough serving as the base for the finger food that is produced.

In a preferred form, the cutting up takes place at a temperature of between 0.5 and 10°C, preferably at a temperature of between 0.5 and 9°C, more preferably at a temperature of between 0.5 and 8°C, more preferably at a temperature of between 1 and 7°C, even more preferably at a temperature of between 1.5 and 6.5°C, even more preferably at a temperature of between 2 and 6°C, even more preferably at a temperature of between 2.5 and 5.5°C, even more preferably at a temperature of between 3 and 5°C, even more preferably at a temperature of between 3.2 and 4.8°C, even more preferably at a temperature of between 3.4 and 4.6°C, even more preferably at a temperature of between 3.6 and 4.4°C, even more preferably at a temperature of between 3.8 and 4.2°C, even more preferably at a temperature of between 3.9 and 4.1°C. Cutting up at a reduced temperature ensures that the dough remains firm.

In a second step (ii) according to a preferred form, one or more leavening agents are added to the resulting dough. In a further preferred form, the leavening agents are added during the cutting up. In this embodiment, the food product is first cut up and after a certain time leavening agents are added to the dough, after which the dough and leavening agents are mixed during a final phase of cutting up and mixing the food product. For example, the food product may be cut up until a continuous dough is obtained without too many lumps, after which leavening agents are added and further cutting up is done so that the leavening agents are mixed with the dough. The leavening agents will also cause the dough to stick together, so that the dough can easily be filled into molds. The term "cutting up" refers to reducing the size of the food product. This can be seen as synonymous with the terms "pulverizing," "grinding," "crushing," "mashing," "finely grinding," "pulverizing."

In an embodiment, after adding the leavening agents, the dough and the leavening agents are mixed together. In a preferred form, the cutting up, the addition of the leavening agents and the mixing take place in the same device, the dough being continuously cut up and mixed.

In a preferred form, leavening agents are added to the dough, in an amount of at most 30 m% of the total finger food weight, preferably in an amount of at most 29 m% of the total finger food weight, more preferably in an amount of at most 28 m% of the total finger food weight, even more preferably in an amount of at most 27 m% of the total finger food weight, even more preferably in an amount of at most 26 m% of the total finger food weight, even more preferably in an amount of at most 25 m% of the total finger food weight, even more preferably in an amount of at most 24 m% of the total finger food weight, most preferably in an amount of at most 23.5 m% of the total finger food weight. In a further or other preferred form, leavening agents are added to the dough, in an amount of at least 0.5 m% of the total finger food weight, preferably in an amount of at least 0.75 m% of the total finger food weight, more preferably in an amount of at least 1 m% of the total finger food weight, even more preferably in an amount of at least 1.1 m% of the total finger food weight, even more preferably in an amount of at least 1.2 m% of the total finger food weight, even more preferably in an amount of at least 1.3 m% of the total finger food weight, even more preferably in an amount of at least 1.4 m% of the total finger food weight, most preferably in an amount of at least 1.5 m% of the total finger food weight. In a further or other preferred form, leavening agents are added to the dough, in an amount between 0.5 and 30 m% of the total finger food weight, preferably in an amount between 0.75 and 29 m% of the total finger food weight, more preferably in an amount between 1 and 28 m% of the total finger food weight, even more preferably in an amount between 1.1 and 27 m% of the total finger food weight, even more preferably in an amount between 1.2 and 26 m% of the total finger food weight, even more preferably in an amount between 1.3 and 25 m% of the total finger food weight, even more preferably in an amount between 1.4 and 24 m% of the total finger food weight, most preferably in an amount between 1.5 and 23.5 m% of the total finger food weight.

In an embodiment, the amount of leavening agents added depends on the food product. In a preferred form, leavening agents are added to a dessert food product, such as for instance chocolate or apple caramel, in an amount of at least 0.5 m% of the total finger food weight, preferably in an amount of at least 0.75 m% of the total finger food weight, more preferably in an amount of at least 1 m% of the total finger food weight, even more preferably in an amount of at least 1.1 m% of the total finger food weight, even more preferably in an amount of at least 1.2 m% of the total finger food weight, even more preferably in an amount of at least 1.3 m% of the total finger food weight, even more preferably in an amount of at least 1.4 m% of the total finger food weight, most preferably in an amount of at least 1.5 m% of the total finger food weight. In a further or other preferred form, leavening agents are added to dessert food products, in an amount of at most 5 m% of the total finger food weight, preferably in an amount of at most 4.5 m% of the total finger food weight, more preferably in an amount of at most 4 m% of the total finger food weight, even more preferably in an amount of at most 3.5 m% of the total finger food weight, even more preferably in an amount of at most 3 m% of the total finger food weight, even more preferably in an amount of at most 2.5 m% of the total finger food weight, even more preferably in an amount of at most 2.4 m% of the total finger food weight, most preferably in an amount of at most 2.3 m% of the total finger food weight. In a further or other preferred form, leavening agents are added to a dessert food product, in an amount between 0.5 and 5 m% of the total finger food weight, preferably in an amount between 0.75 and 4.5 m% of the total finger food weight, more preferably in an amount between 1 and 4 m% of the total finger food weight, even more preferably in an amount between 1.1 and 3.5 m% of the total finger food weight, even more preferably in an amount between 1.2 and 3 m% of the total finger food weight, even more preferably in an amount between 1.3 and 2.5 m% of the total finger food weight, even more preferably in an amount between 1.4 and 2.4 m% of the total finger food weight, most preferably in an amount between 1.5 and 2.3 m% of the total finger food weight.

In an embodiment, the amount of leavening agents added depends on the food product. In a preferred form, leavening agents are added to a main course food product, such as potatoes, applesauce, vol-au-vent, etc., in an amount of up to 30 m% of the total finger food weight, preferably in an amount of up to 29 m% of the total finger food weight, more preferably in an amount of up to 28 m% of the total finger food weight, even more preferably in an amount of up to 27 m% of the total finger food weight, even more preferably in an amount of up to 26 m% of the total finger food weight, even more preferably in an amount of up to 25 m% of the total finger food weight, even more preferably in an amount of up to 24 m% of the total finger food weight, most preferably in an amount of up to 23.5 m% of the total finger food weight. In a further or other preferred form, leavening agents are added to main course food products, in an amount of at least 5 m% of the total finger food weight, preferably in an amount of at least 5.5 m% of the total finger food weight, more preferably in an amount of at least 6 m% of the total finger food weight, even more preferably in an amount of at least 6.2 m% of the total finger food weight, even more preferably in an amount of at least 6.4 m% of the total finger food weight, even more preferably in an amount of at least 6.6 m% of the total finger food weight, even more preferably in an amount of at least 6.8 m% of the total finger food weight, most preferably in an amount of at least 7 m% of the total finger food weight. In a further or other preferred form, leavening agents are added to main course food products, in an amount between 5 and 30 m% of the total finger food weight, preferably in an amount between 5.5 and 29 m% of the total finger food weight, more preferably in an amount between 6 and 28 m% of the total finger food weight, even more preferably in an amount between 6.2 and 27 m% of the total finger food weight, even more preferably in an amount between 6.4 and 26 m% of the total finger food weight, even more preferably in an amount between 6.6 and 25 m% of the total finger food weight, even more preferably in an amount between 6.8 and 24 m% of the total finger food weight, most preferably in an amount between 7 and 23.5 m% of the total finger food weight.

The leavening agents preferably comprise between 1 and 20 m% unsaturated fats of the total leavening agent weight, more preferably between 5 and 15 m% unsaturated fats, even more preferably between 7.5 and 12.5 m% unsaturated fats. The leavening agents preferably comprise a maximum of 5 m% saturated fats, more preferably a maximum of 4 m% saturated fats, even more preferably a maximum of 3 m% saturated fats.

The fats are a good source of energy, vitamin A, vitamin D, vitamin E and essential fatty acids for the finger food consumer, as this consumer is often an elderly person. In addition, the low amount of saturated fat ensures a reduction in LDL cholesterol. Too high LDL cholesterol is not good for the blood vessels and can lead to cardiovascular disease. Examples of fats that may comprise the leavening agents are almond oil, argan oil, avocado oil, behen oil, borage oil, cocoa butter, cajaputi oil, grapeseed oil, echium oil, hazelnut oil, hemp oil, jatropha oil, cottonseed oil, coconut oil, rapeseed oil, carap oil, linseed oil, macadamia oil, corn oil, olive oil, palm oil, palm kernel oil, peanut oil, canola oil, rice germ, sacha inchi oil, safflower oil, sesame oil, soybean oil, tamanu, wheat germ oil, evening primrose oil, walnut oil, castor oil, sunflower oil, or a combination thereof. Preferably, the leavening agents comprise sunflower oil, olive oil, or a combination thereof.

In an embodiment, the leavening agents comprise carbohydrates, such as starch, sugars and fibers, in an amount between 30 and 70 m% of the total leavening agent weight, preferably in an amount between 35 and 65 m%, more preferably between 40 and 60 m%, most preferably between 45 and 55 m%. In an embodiment, the leavening agents comprise sugars, such as monosaccharides and disaccharides, in an amount between 1 and 15 m% of the total leavening agent weight, preferably in an amount between 3 and 10 m%, more preferably between 4 and 8 m%, most preferably between 5 and 7 m%. Sugars and starches are carbohydrates that on the one hand are an important source of energy for the body. On the other hand, the sugars help to increase the shelf life of the product by, among other things, extracting moisture from the food product. Examples of sugars and starches that may comprise the leavening agents are native starch and modified starch. Modified starch is prepared by physically, enzymatically or chemically treating native starch to change its properties. Examples of modified starch are dextrin (roasted starch with hydrochloric acid), alkaline-modified starch with sodium hydroxide or potassium hydroxide, bleached starch with hydrogen peroxide, oxidized starch with sodium hypochlorite, enzyme-treated starches such as maltodextrin and cyclodextrin, monostarch phosphate with phosphoric acid or the salts: sodium phosphate, potassium phosphate or sodium triphosphate, distarch phosphate by esterification with, for example, sodium trimetaphosphate, cross-linked starch, acetylated starch esterification with acetic anhydride, hydroxypropylated starch with propylene oxide, hydroxyethyl starch, with ethylene oxide, starch sodium octenyl succinate, starch aluminum octenyl succinate, cationic starch, carboxymethylated starch with monochloroacetic acid. Preferably, the leavening agents comprise native starch, maltodextrin, modified corn or tapioca starch, or a combination thereof. The starches present, such as maltodextrin, provide binding properties to the leavening agents and prevent crystallization in powders, which also results in a firm dough.

In a preferred form, the leavening agents comprise diphosphates (E450), sodium carbonates (E500), or a combination thereof. For example, diphosphates may comprise disodium diphosphate, trisodium diphosphate, tetrasodium diphosphate, dipotassium diphosphate, tetrapotassium diphosphate, dicalcium diphosphate, calcium dihydrogen diphosphate, or a combination thereof. For example, sodium carbonates may include sodium carbonate, sodium hydrogencarbonate, sodium sesquicarbonate, or a combination thereof. The sodium carbonates create air bubbles in a dough during steaming so that the finger food becomes fluffier and easier to chew. The diphosphates provide a thickening that makes the finger food firm enough to grip with fingers.

In an embodiment, the dough is filled after steaming (step (iii)). The dough is preferably filled into filling molds. The filling molds can have any shape, but the molds preferably have a largest dimension smaller than 10 cm and a smallest dimension larger than 1 cm. This is so that the finger food is easy to hold with fingers and so that the finger food fits easily in the consumer's mouth. In an embodiment, the dough is cooled, preferably blast chilled, prior to filling. In a further embodiment, the cooling takes place at a minimum temperature of 0°C, preferably the temperature is at least 0.5°C. In a further or another embodiment, the temperature is maximally 15°C, preferably maximally 14°C, more preferably maximally 13°C, even more preferably maximally 12°C, even more preferably maximally 11°C, even more preferably maximally 10°C, even more preferably maximally 9°C, even more preferably maximally 8°C, even more preferably maximally 7°C, even more preferably maximally 6°C, even more preferably maximally 5°C, even more preferably maximally 4°C, even more preferably maximally 3°C, even more preferably maximally 2°C, most preferably maximally 1.5°C. In a preferred form, the temperature is between 0 and 2°C, more preferably between 0.5 and 1.5°C.

In a next step (iv) of the method, the filled dough is steamed. In a preferred form, the steaming in step (iv) takes place at a minimum temperature of 60°C, preferably at a temperature of at least 65°C, more preferably at a temperature of at least 70°C, even more preferably at a temperature of at least 75°C, even more preferably at a temperature of at least 80°C, even more preferably at a temperature of at least 85°C, even more preferably at a temperature of at least 90°C, even more preferably at preferably at a temperature of at least 91°C, even more preferably at a temperature of at least 92°C, even more preferably at a temperature of at least 93°C, even more preferably at a temperature of at least 94°C, even more preferably at a temperature of at least 95°C, even more preferably at a temperature of at least 96°C, most preferably at a temperature of at least 97°C.

In a preferred form, the steaming in step (iv) takes place at a maximum temperature of 140°C, preferably at a temperature of at most 135°C, more preferably at a temperature of at most 130°C, even more preferably at a temperature of at most 125°C, even more preferably at a temperature of at most 120°C, even more preferably at a temperature of at most 115°C, even more preferably at a temperature of at most 110°C, even more preferably at a temperature of at most 105°C, even more preferably at a temperature of at most 104°C, even more preferably at a temperature of at most 103°C, even more preferably at a temperature of at most 102°C, even more preferably at a temperature of at most 101°C, even more preferably at a temperature of at most 100°C, most preferably at a temperature of at most 99°C.

In another preferred form, the steaming in step (iv) takes place at a temperature of between 60 and 140°C, preferably at a temperature of between 65 and 135°C, more preferably at a temperature of between 70 and 130°C, even more preferably at a temperature of between 75 and 125°C, even more preferably at a temperature of between 80 and 120°C, even more preferably at a temperature of between 85 and 115°C, even more preferably at a temperature of between 90 and 110°C, even more preferably at a temperature of between 91 en 105°C, even more preferably at a temperature of between 92 and 104°C, even more preferably at a temperature of between 93 and 103°C, even more preferably at a temperature of between 94 and 102°C, even more preferably at a temperature of between 95 and 101°C, even more preferably at a temperature of between 96 and 100°C, most preferably at a temperature of between 97 and 99°C.

Another important parameter is the core temperature of the finger food after steaming (step iv). In a preferred form, the core temperature of the finger food after steaming in step (iv) is at least 65°C, more preferably at least 66°C, even more preferably at least 67°C, even more preferably at least 68°C, even more preferably at least 69°C, even more preferably at least 70°C, even more preferably at least 71°C, even more preferably at least 72°C, even more preferably at least 73°C, even more preferably at least 74°C, even more preferably at least 75°C.

In a preferred form, steaming continues for a period of time comprised between 1 and 30 minutes, preferably between 5 and 30 minutes, even more preferably between 5 and 29 minutes, even more preferably between 6 and 28 minutes, even more preferably between 7 and 27 minutes, even more preferably between 8 and 26 minutes, even more preferably between 9 and 25 minutes, even more preferably between 10 and 24 minutes, even more preferably between 11 and 23 minutes, even more preferably between 110 and 130 minutes, even more preferably between 12 and 22 minutes, even more preferably between 13 and 21 minutes, even more preferably between 14 and 20 minutes, even more preferably between 15 and 19 minutes, most preferably between 16 and 18 minutes.

In step (v), the finger food is preferably blast chilled and frozen after steaming. In an embodiment, the dough is blast chilled after steaming and prior to freezing. The term "blast chilling," as used in the text, refers to a process in which a food product is brought to a temperature of a maximum of 2°C, preferably a maximum of 1°C, very quickly (less than 10 hours).

The advantage is that blast chilling improves the quality of the final product before freezing. This prevents the formation of crystals on the finger food. By cooling the hot products immediately after preparation, they can be stored for 5 to 7 days and the quality remains at a high level. The moisture in the product, which normally evaporates after cooking, is retained in the product during blast chilling and prevents drying out, loss of weight and quality.

In a further embodiment, the blast chilling takes place at a minimum temperature of 0°C, preferably the temperature is at least 0.5°C. In a further or another embodiment, the temperature is maximally 15°C, preferably maximally 14°C, more preferably maximally 13°C, even more preferably maximally 12°C, even more preferably maximally 11°C, even more preferably maximally 10°C, even more preferably maximally 9°C, even more preferably maximally 8°C, even more preferably maximally 7°C, even more preferably maximally 6°C, even more preferably maximally 5°C, even more preferably maximally 4°C, even more preferably maximally 3°C, even more preferably maximally 2°C, most preferably maximally 1.5°C. In a preferred form, the temperature is between 0 and 2°C, more preferably between 0.5 and 1.5°C.

In another or further embodiment, the cooling continues for a period of time comprised between 1 and 120 minutes, preferably between 5 and 115 minutes, more preferably between 10 and 110 minutes, even more preferably between 15 and 105 minutes, even more preferably between 20 and 100 minutes, even more preferably between 25 and 95 minutes, even more preferably between 30 and 90 minutes, even more preferably between 35 and 85 minutes, even more preferably between 40 and 80 minutes, even more preferably between 45 and 75 minutes, even more preferably between 50 and 70 minutes, even more preferably between 55 and 75 minutes, even more preferably between 56 and 64 minutes, even more at preferably between 57 and 63 minutes, even more preferably between 58 and 62 minutes, most preferably between 59 and 61 minutes.

In another preferred form of the invention, the finger food is cooled within 10 hours until the food product has a temperature lower than 7°C.

In an embodiment, freezing takes place at a minimum temperature of -30°C, preferably the temperature is at least -25°C, more preferably the temperature is at least -20°C, even more preferably at least -19°C, most preferably at least -18°C. In a further or other embodiment, freezing takes place at a maximum temperature of -15°C, preferably the temperature is a maximum of -16°C, more preferably the temperature is a maximum of -17°C, even more preferably a maximum of -18°C, most preferably a maximum of -18°C.

In another or further embodiment, freezing continues for a minimum of 10 hours, preferably a minimum of 10.5 hours, more preferably a minimum of 11 hours, even more preferably a minimum of 11.5 hours, even more preferably a minimum of 12 hours.

The obtained finger food is delivered to the consumer in a frozen state, which considerably increases the shelf life of the product. This also preserves tastes and aromas in the finger food during storage, as well as the nutritional value of the product.

The invention furthermore also relates to a finger food. The finger food comprises a cut up food product. Preferably, a cut up prepared food product.

In a second aspect, the invention relates to finger food comprising a cut up food product and one or more leavening agents. Preferably, a cut up prepared food product.

In a preferred embodiment, the finger food has improved elasticity and texture, with the texture being consistent enough not to disintegrate during consumption, but also not too much so, so that the elderly do not have difficulty chewing.

In a preferred form, the finger food comprises one or more leavening agents, in an amount between 0.5 and 30 m% of the total finger food weight.

In a preferred form, the finger food consists of the following components:
- a cut up food product, in an amount between 99.5 m% and 65 m% of the total finger food weight,
- one or more leavening agents, in an amount between 0.5 and 30 m% of the total finger food weight, and
- additives in an amount of at most 5 m% of the finger food.

In an embodiment, the finger food has a weight between 10 and 50 grams, preferably between 10 and 45 grams, more preferably between 10 and 40 grams, even more preferably between 10 and 35 grams, most preferably between 10 and 30 grams.

The finger food obtained has improved elasticity and texture, with the texture being consistent enough not to disintegrate during consumption, but also not too much so, so that the elderly do not have difficulty chewing. Moreover, the finger food allows an easy grip between the fingers or in the hand without falling apart.

In a preferred form, the finger food has a hardness of between 1 and 40 N, preferably between 2.5 and 35 N, even more preferably between 5 and 30 N, even more preferably between 7 and 25 N.

It has been found that this hardness ensures a sufficiently high hardness to be grasped between the fingers, but a sufficiently low hardness so that biting and chewing can proceed easily. A higher hardness results in a product that is difficult to chew. A lower hardness results in a product that cannot be held properly.

In a preferred form, the finger food has an adhesiveness of maximally 10 N.s, preferably maximally 8 N.s, more preferably maximally 6 N.s, even more preferably maximally 4 N.s, even more preferably maximally 2.5 N.s, even more preferably maximally 2 N.s, even more preferably maximally 1.5 N.s

In a further or other preferred form, the finger food has an adhesiveness of between 0.01 and 10 N.s, preferably between 0.01 and 8 N.s, more preferably between 0.01 and 6 N.s, even more preferably between 0.01 and 4 N.s, even more preferably between 0.01 and 2.5 N.s, even more preferably between 0.01 and 2 N.s, even more preferably between 0.01 and 1.5 N.s.

The adhesiveness is an indicator of the stickiness of the finger food between the fingers and the amount of force required to remove food from the oral cavity during swallowing. The adhesiveness of food has an impact on the effort required during swallowing. The inventors found that finger food with a low adhesiveness was easier to swallow by an untrained panel and that less food residue remained in the oral cavity. Food residue left in the oral cavity after consumption can accumulate in the pharynx and increase the likelihood of aspiration. It has been found that an adhesiveness within this range ensures a product that is sufficiently easy to swallow.

In a preferred form, the finger food has a cohesion of between 1 and 50%, preferably between 5 and 50%, even more preferably between 10 and 50%, even more preferably between 10 and 45%.

The cohesion can be seen as a measure of the internal strength of the food structure and thus as a measure of how hard one has to chew to break down the food structure. It has been found that the cohesion of the finger food within these limits is ideal for obtaining the desired properties, such as hardness of chewing. Higher cohesion would make it necessary to chew too hard. Lower cohesion would cause the finger food product to fall apart in the mouth, but also possibly in the hand, which is of course undesirable.

In a preferred form, the finger food has a gumminess of maximally 20 N, preferably maximally 15 N, more preferably maximally 10 N, even more preferably maximally 8 N, even more preferably maximally 7 N.

In a further or other preferred form, the finger food has a gumminess of between 0.1 and 20 N, preferably between 0.1 and 15 N, more preferably between 0.1 and 10 N, even more preferably between 0.1 and 8 N, even more preferably between 0.1 and 7 N, even more preferably between 1 and 7 N.

The gumminess describes the amount of energy required to convert food into a swallowable bolus. Finger foods with too much gumminess can increase the risk of aspiration.

In a preferred form, the finger food exhibits shear-thinning behavior. The shear-thinning behavior of the finger food is advantageous, as a higher viscosity at lower shear forces will facilitate bolus formation in the mouth, while a lower viscosity at higher shear forces (swallowing) would reduce the effort to swallow.

Preferably, the finger food has an apparent viscosity of between 0.1 and 50 Pa·s at a shear rate of 10 s⁻¹ at 35°C, more preferably between 0.1 and 40 Pa·s, even more preferably between 0.1 and 30 Pa·s.

Preferably, the finger food has an apparent viscosity of between 0.1 and 30 Pa·s at a shear rate of 20 s⁻¹ at 35°C, more preferably between 0.1 and 20 Pa·s, even more preferably between 0.1 and 15 Pa·s.

However, the viscosity must not become too low at high shear stresses, otherwise there is a risk of aspiration.

The properties of the finger food can be measured/tested using ISO 11036:2020.

The above advantageous properties are due to the optimized method as described above. The combination of process steps with the addition of leavening agents ensures that an airy finger food is obtained that is pleasant both in the hand and in the mouth for the elderly and people with reduced motor skills.

In what follows, the invention is described by way of non-limiting examples illustrating the invention, and which are not intended to and should not be interpreted as limiting the scope of the invention.

### DESCRIPTION OF THE FIGURES AND EXAMPLES

### Figures 1 and 2

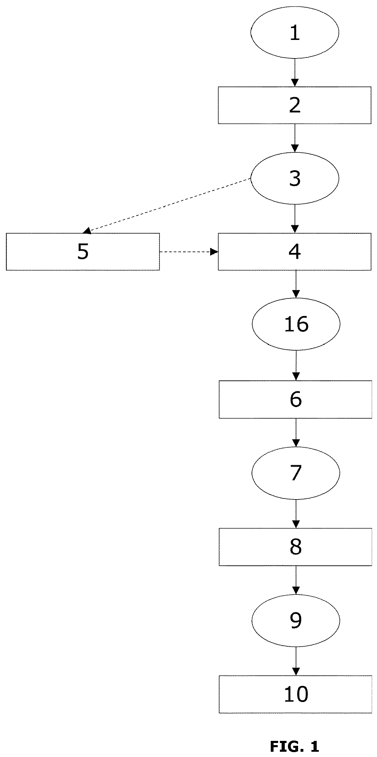

A schematic representation of a method according to a preferred form of the present invention is shown in **Figure 1****.** A cooled food product **1** is cut up **2** into a dough **3** at a temperature of 4°C. The dough **3** is then filled **4** into the desired molds. The filling molds can have any shape, but the molds preferably have a largest dimension smaller than 10 cm and a smallest dimension larger than 1 cm. Optionally, the dough **3** can be cooled first **5,** before filling **4.** The filled dough **16** is steamed **6** for 17 minutes at a temperature of 98°C, so that the core of the filled dough **16** reaches a temperature greater than 70°C. This results in finger food **7** that is blast chilled **8.** The finger food **7** is cooled at a temperature of 1°C for 1 hour. Subsequently, the blast chilled finger food **9** is frozen **10** for at least 12 hours at -18°C.

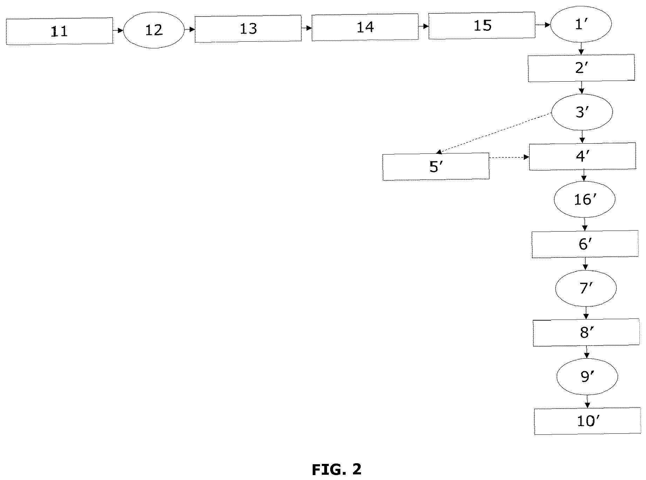

A schematic representation of a further preferred form of the present invention is shown in **Figure 2****.** A food product **12** is prepared by combining ingredients **11** according to a certain recipe depending on the intended food product **12.** The food product is cooled and thermoform packaged **13.** The packages are then cooked/pasteurized **14** for 2 hours at 98°C and blast chilled **15** for 5 hours at 1°C. The packages are then opened and the cooled cooked/pasteurized food product **1'** is cut up **2'** into a dough **3'** at a temperature of 4°C. The dough **3'** is then filled **4'** into the desired molds. The filling molds can have any shape, but the molds preferably have a largest dimension smaller than 10 cm and a smallest dimension larger than 1 cm. Optionally, the dough **3'** can be cooled **5'** before filling **4'.** The filled dough **16'** is steamed **6'** for 17 minutes at a temperature of 98°C, so that the core of the filled dough **16'** reaches a temperature greater than 70°C. This results in finger food **7'** which is cooled **8',** preferably blast chilled. The finger food **7'** is cooled at a temperature of 1°C for 1 hour. Subsequently, the cooled finger food **9'** is frozen **10'** for a minimum of 12 hours at -18°C.

### Examples 1-44: composition of finger food

Examples 1-44, shown in **Table 1,** concern compositions of various finger foods obtained by a method as described in **Figures 1** and **2****.**

The amount of added leavening agent (m%) can vary depending on the quality of the raw materials and should therefore be interpreted as an average here.

**TABLE 1**

| | **Finger food** | **Weight (g)** | **Raising agent (m%)** |
|---|---|---|---|
| Example 1 | potato | 13.5 | 8.43 |
| Example 2 | apple sauce | 24 | 17.08 |
| Example 3 | cauliflower cheese | 27 | 14.32 |
| Example 4 | stewed beans | 27 | 12.80 |
| Example 5 | butter beans | 24 | 15.34 |
| Example 6 | Broccoli in béchamel sauce | 27 | 20.90 |
| Example 7 | loin roast | 22 | 8.06 |
| Example 8 | loin chop | 22 | 8.18 |
| Example 9 | coq au vin | 23 | 17.07 |
| Example 10 | dessert: apple caramel | 21 | 1.87 |
| Example 11 | dessert: chocolate | 21 | 2.16 |
| Example 12 | peas and carrot | 25 | 10.39 |
| Example 13 | poultry | 24 | 7.47 |
| Example 14 | vegetable wreath | 24 | 17.37 |
| Example 15 | ham roll with chicory | 24.5 | 17.73 |
| Example 16 | hotch-potch [Flemish hutsepot] | 24 | 18.52 |
| Example 17 | Irish lamb navarin | 23 | 17.54 |
| Example 18 | veal blanquette | 23.5 | 19.14 |
| Example 19 | chicken | 24 | 8.74 |
| Example 20 | sweet and sour chicken | 26 | 17.54 |
| Example 21 | celeriac cheese | 25 | 20.00 |
| Example 22 | pollock | 24 | 11.69 |
| Example 23 | macaroni ham cheese | 25 | 12.19 |
| Example 24 | pasta | 13 | 7.60 |
| Example 25 | leek stewed | 27 | 19.42 |
| Example 26 | ratatouille | 27 | 20.00 |
| Example 27 | rice | 13 | 7.59 |
| Example 28 | red cabbage | 25 | 16.98 |
| Example 29 | beef burger | 24.5 | 11.40 |
| Example 30 | savoy cabbage | 24 | 21.15 |
| Example 31 | salsify bechamel sauce | 25 | 21.57 |
| Example 32 | spinach | 27 | 13.48 |
| Example 33 | sprouts with bacon | 27 | 17.53 |
| Example 34 | beef stew | 24 | 15.07 |
| Example 35 | tikka masala | 24 | 16.05 |
| Example 36 | pork gyros | 22 | 21.01 |
| Example 37 | stewed fennel | 27 | 23.08 |
| Example 38 | meatloaf | 23 | 13.13 |
| Example 39 | vol-au-vent | 23 | 16.05 |
| Example 40 | chicory | 27 | 18.10 |
| Example 41 | white cabbage in béchamel sauce | 25 | 21.57 |
| Example 42 | whitefish | 22 | 14.20 |
| Example 43 | stewed carrot | 24 | 15.47 |
| Example 44 | salmon | 21 | 11.69 |

### Example 45: leavening agent composition

Example 45 concerns the composition of a leavening agent as used in examples 1-44, wherein the leavening agent comprises the following components: potato, chicken egg white, egg yolk, maltodextrin, potato starch, rice flour, sunflower oil, diphosphates (E450), sodium carbonates (E500), glucose syrup, sugar, extra virgin olive oil, spices (pepper, nutmeg), modified starch (corn, tapioca) and salt.

### Example 46: texture profile analysis of the finger food

The obtained finger food given in Table 2 was subjected to a texture profile analysis.

**TABLE 2**

| | **Prepared food product** |
|---|---|
| **Example 1** | Potato |
| **Example 44** | Salmon |
| **Example 39** | Vol-au-vent |
| **Example 7** | Loin roast |
| **Example 43** | Ca rrot |

The texture profile analysis (TPA) was performed with an Instron 5942 texture analyzer (Instron, USA) equipped with a 500 N load cell. A "two-bite" compression test was performed with a cylindrical probe (diameter = 5 cm) at a speed of 1 mm/s to a compression level of 50%. All measurements were performed in quintuplicate. Bluehill 3 software was used to collect the experimental data. Various parameters were determined from the obtained curve, as given in Table 3.
- Hardness (N): maximum force recorded during the first compression (Z1), a measure of the hardness of the food product.
- Adhesiveness (N.s): negative area of the first compression curve (A3), a measure of the adhesiveness between the probe and the sample.
- Cohesion (%): the ratio of the positive area of the first (A1) and second compression curves (A2), a measure of how well the structure of the product recovers after the first compression.
- Gumminess (N): the product of hardness and cohesion.
- Resilience (%): the ratio of the surface before reaching maximum force to the surface after reaching maximum force during initial compression, a measure of how strongly the product wants to return to its original shape.

**TABLE 3**

| | **Example 1** | **Example 44** | **Example 39** | **Example 7** | **Example 43** |
|---|---|---|---|---|---|
| **Hardness (N)** | 16.8 ± 1.5 | 14.0 ± 0.9 | 24.6 ± 3.0 | 11.1 ± 0.7 | 9.0 ± 1.0 |
| **Adhesiveness (N.s)** | 1.7 ± 0.5 | 0.1 ± 0.0 | 0.1 ± 0.1 | 0.6 ± 0.2 | 0.1 ± 0.0 |
| **Cohesion (%)** | 27.9 ± 0.4 | 43.8 ± 4.8 | 13.8 ± 1.3 | 44.5 ± 2.1 | 37.1 ± 6.1 |
| **Gumminess (N)** | 4.7 ± 0.4 | 6.1 ± 0.6 | 3.4 ± 0.3 | 4.9 ± 0.5 | 3.3 ± 0.5 |
| **Resilience (%)** | 5.7 ± 0.4 | 15.1 ± 2.8 | 4.1 ± 0.6 | 10.8 ± 1.2 | 31.4 ± 31.6 |

The finger food mentioned above was also subjected to a consumer test with a group of elderly people with impaired motor skills. The finger food turned out to be easy to grip between the fingers but was also still easy to chew and swallow.

The hardness of the samples indicates the maximum force required to compress food between the tongue and the palate, but also how much force fingers can exert on the finger food.

Furthermore, the adhesiveness is an indicator of the stickiness of the finger food between the fingers and the amount of force required to remove food from the oral cavity during swallowing, and the cohesion is a measure of the internal strength of the food structure and thus as a measure of how hard to chew to break down the food structure.

### Comparative example 47: food product according to US6676986

A food product was made according to the method of US6676986:
Salmon is placed in a vacuum drum with a mixture of spices and tumbled for about 10 minutes. The salmon mixture is then placed in a dish, placed in a convection oven and cooked at 104°C for two hours. The salmon mixture is cooled to 1°C after cooking and placed in a slicing machine. An aqueous gel consisting of Konjac flour and carrageenan is added to the slicing machine. In this composition, the Konjac flour and the carrageenan act as a lubricant/thickening agent, which is present in 4% of the salmon on a dry basis. The salmon mixture is then frozen to -18°C. The frozen salmon mixture is tempered to 5°C using a microwave oven. The salmon mixture is then heated to 82°C using a convection oven and pressed into fish fillet molds by applying 20 psi of air pressure. Plastic film is placed over the open part of the molds. The salmon-containing molds are either refrigerated to -18°C until frozen and solid.

After freezing, the individual molded products are removed from the molds and placed on individual plates. Before serving, the formed salmon mixture is heated to 75°C.

The above-mentioned food product was also subjected to a consumer test with a group of elderly people with impaired motor skills. Once heated up, it appeared that these food products cannot be handled in the hand and can only be eaten with cutlery. Elderly people who have reduced motor skills still need help eating this food product.

The hardness of the above food product was <1 N, which is not abnormal as it is a pureed food product.

This is in contrast to a finger food obtained according to the current invention, which has the advantage that the airiness provided by the leavening agents to the finger food ensures that a sufficiently high hardness is achieved to be held between the fingers, but a sufficiently low hardness so that biting and chewing can easily take place.

### Example 48: Viscosity of the finger food in artificial saliva

The apparent viscosity of the finger food, pre-mixed with a certain amount of artificial saliva, can be determined via a rheological measurement. The apparent viscosity of a food product when mixed with saliva is relevant to swallowing during consumption.

The flow behavior of the finger food from table 2 was measured using an AR2000ex rheometer equipped with conical concentric cylinders (TA Instruments, New Castle, USA). The finger food was pre-regenerated in the microwave oven and mixed with artificial saliva in a 1/1 ratio using a magnetic stirrer (1 min, 700 rpm, 20°C). The analysis was performed at a constant temperature of 35°C to simulate the conditions in the mouth. The sample was conditioned at 35°C for 3 minutes at a shear rate of 2 s⁻¹. After this, the shear rate was logarithmically increased from 2 s⁻¹ to 100 s⁻¹ and the shear stress and viscosity were recorded. Analysis was performed in triplicate.

Saliva is a biological fluid consisting mainly of water, proteins, enzymes and other organic and inorganic components. The secretion of saliva during food consumption plays an important role in forming the food bolus. The continuous mixing of saliva with the food chunks has a lubricating effect, reducing friction, and will significantly alter the rheological properties of the product in the mouth. The composition of the artificial saliva can be found in Table 4.

**TABLE 4**

| **Ingredient** | **Concentration (g/L water)** |
|---|---|
| Sodium chloride | 0.11 |
| Potassium chloride | 1.49 |
| Sodium bicarbonate | 3.95 |
| Calcium chloride | 0.28 |
| Magnesium chloride hexahydrate | 0.10 |
| Mucin (pork) | 1.50 |
| α-amylase | 2.00 |

During oral processing, food is subject to different shear rates as food is swallowed. For example, the shear forces in the mouth are smaller than those during swallowing.

All finger foods show a shear-thinning behavior, the viscosity decreasing as the samples are subjected to higher shear rates. The shear-thinning behavior of the finger food is advantageous, as a higher viscosity at lower shear forces will facilitate bolus formation in the mouth, while a lower viscosity at higher shear forces (swallowing) would reduce the effort to swallow.

## Claims

1. A method for manufacturing finger food from a food product comprising the sequential steps of:
i. cutting up a prepared food product into a dough;
ii. adding one or more leavening agents to the dough;
iii. filling the dough into molds;
iv. steaming the filled dough from step (iii) at a temperature of between 80 and 120°C, wherein the dough rises, and wherein finger food is obtained;
v. blast chilling and freezing of the finger food.

2. Method according to claim 1, wherein the leavening agents comprise diphosphates (E450), sodium carbonates (E500), or a combination thereof.

3. Method according to claim 1 or 2, wherein the cutting up of the food product into a dough takes place at a temperature between 1 and 10°C.

4. Method according to any of the preceding claims, wherein one or more leavening agents are added to the dough, in an amount between 0.5 and 30 m% of the total finger food weight.

5. Method according to any of the preceding claims, wherein the food product is cooked prior to being cut up.

6. Method according to claim 5, wherein the cooking takes place at a temperature between 85 and 110°C.

7. Method according to claim 5 or 6, wherein the cooking continues for a period of time between 60 and 180 minutes, preferably between 90 and 150 minutes, more preferably between 105 and 135 minutes.

8. Method according to any of the preceding claims, wherein the steaming continues for a period of time between 5 and 30 minutes, preferably between 10 and 25 minutes, more preferably between 15 and 20 minutes.

9. Method according to any of the preceding claims, wherein the dough is cooled prior to filling.

10. Method according to any of the preceding claims, wherein the food product is a precooked food product.

11. Method according to any of the preceding claims, wherein the steaming takes place at a temperature between 91°C and 120°C.

12. A finger food comprising a cut up prepared food product, wherein the finger food has a hardness between 1 and 40 N.

13. Finger food according to claim 12, wherein the finger food has an adhesiveness of at most 2 N.s.

14. Finger food according to claim 12 or 13, wherein the finger food has a gumminess of up to 20 N.

15. Finger food according to claim 12 or 13, wherein the finger food has an apparent viscosity between 0.1 and 50 Pa·s at a shear rate of 10 s⁻¹ at 35°C.
